# EUROPEAN PATENT SPECIFICATION

(11) **EP 4 346 000 B1**
(45) Date of publication and mention of the grant of the patent: **11.02.2026**
(21) Application number: 22824036.2
(22) Date of filing: 27.05.2022
(51) Int. Cl.: H01M 50/403, H01M 50/451, H01M 50/457, H01M 50/411, H01M 50/414, H01M 50/417, H01M 50/426, H01M 50/434, H01M 50/44, H01M 10/0525, H01M 50/446, H01M 50/46, H01M 50/489, C09D 7/20, C09D 7/61, C09D 127/16, C09J 127/16, C09J 179/08

(54) **COATING LIQUID, COATED SEPARATOR, SEPARATOR PREPARATION METHOD, AND BATTERY**
BESCHICHTUNGSFLÜSSIGKEIT, BESCHICHTETER SEPARATOR, SEPARATORHERSTELLUNGSVERFAHREN UND BATTERIE
LIQUIDE DE REVÊTEMENT, SÉPARATEUR REVÊTU, PROCÉDÉ DE PRÉPARATION DE SÉPARATEUR ET BATTERIE

(30) Priority: 16.06.2021 CN 202110665849
(43) Date of publication of application: 03.04.2024
(73) Proprietor: Shenzhen Senior Technology Material Co., Ltd., Shenzhen, Guangdong 518106 (CN); Jiangsu Senior New Material Technology Co., Ltd, Changzhou, Jiangsu 213100 (CN)
(72) Inventor: YANG, Dandan, Shenzhen, Guangdong 518106 (CN); PING, Xiang, Shenzhen, Guangdong 518106 (CN); HUANG, Huizhen, Shenzhen, Guangdong 518106 (CN); LIN, Yulin, Shenzhen, Guangdong 518106 (CN)
(74) Representative: J A Kemp LLP
(86) International application number: PCT/CN2022/095781
(87) International publication number: WO 2022/262556

(56) References cited:
- WO-A1-2020/138628
- CN-A- 104 835 931
- CN-A- 106 953 050
- CN-A- 106 953 050
- CN-A- 107 275 550
- CN-A- 108 847 468
- CN-A- 108 847 468
- CN-A- 109 524 603

## Description

### TECHNICAL FIELD

The present disclosure relates to the technical field of battery separators, and in particular to a coating liquid for coating a battery separator, a separator coated with the coating liquid, a preparation method of the separator coated with the coating liquid, and a battery including the separator coated with the coating liquid.

### BACKGROUND

A lithium-ion battery separator is one of the four core components of a lithium-ion battery (LIB), and plays the roles of separating positive and negative electrodes, allowing the passage of lithium ions, and insulating electrons in a LIB. The performance of a separator directly affects the performance of a LIB including the separator, and is one of the key technologies restricting the development of LIBs.

LIB separators used in hybrid electric vehicles (HEVs), electric vehicles (EVs), and energy storage need to meet performance requirements such as high heat resistance, low impedance, and high bonding strength.

However, the existing separators still have unsatisfactory heat resistance. Therefore, how to effectively improve the heat resistance of a separator has become an urgent technical problem to be solved in the industry.

CN 106953050 A discloses a kind of high temperature resistance multilayer barrier film composite lithium ion cell barrier film, belong to the technical field of battery diaphragm, including battery diaphragm, the composite lithium ion cell barrier film is the laminated construction being at least made up of two layers of battery diaphragm, it is adhesively fixed between adjacent cell membrane layer by coating sizing-agent, the coating sizing-agent is by mass percentage, including coating paste 20-40%, adhesive 3-6%, dispersant 0.2-0.5%, gelling agent 0.2-0.5%, plasticizer 0.05-0.2%, age resister 0.05-0.2%, crosslinking agent 0.05-0.2%, thickener 0.1-0.5%, light trigger 0.3-1%, surplus is deionized water. The invention provides the preparation method of the high temperature resistance multilayer barrier film composite lithium ion cell barrier film. Battery diaphragm of the present invention had both possessed the higher security that coated separator is brought to battery, simultaneously again being capable of high temperature resistant, reduce the shrinkage factor of hot conditions lower diaphragm plate, increase the bulk life time of battery, and the compatibility of barrier film and electrolyte can be improved, it ensure that barrier film is fully swelled the cycle life for helping to extend battery by electrolyte.

WO 2020/138628 A1 relates to a separator for a lithium secondary battery, and a lithium secondary battery comprising same. The separator comprises a porous substrate and a coating layer placed on at least one surface of the porous substrate, wherein the coating layer includes: a heat-resistant binder comprising a (meth)acrylic copolymer which bears a first structural unit derived from (meth)acrylamide, and a second structural unit including at least one of a structural unit derived from (meth)acrylic acid or (meth)acrylate and a structural unit derived from (meth)acrylamidosulfonic acid or a salt thereof; an adhesive binder having a core-shell structure; and inorganic particles, wherein the average particle diameter of the adhesive binder is 0.2 to 1.0 µm, and the average particle diameter of the inorganic particles is 0.2 to 1.0 µm.

### SUMMARY

The present disclosure is defined by the appended claims.

Compared with the prior art, the present disclosure at least has the following technical effects:
The present disclosure provides a coating liquid and a coated separator, the solvent is N-methylpyrrolidone, and a weight proportion of a photoinitiator in the coating liquid is controlled at 0.08 wt% to 1.0 wt%. When the solvent is N-methylpyrrolidone the weight proportion of the photoinitiator in the coating liquid is controlled in the above range, the photoinitiator can well penetrate into separator substrate layers (a ceramic layer and a membrane) after the coating liquid is coated on the membrane to ensure that enough reactive free radicals are produced by the photoinitiator in the membrane, the ceramic layer, and a combined interface layer to allow sufficient photoinitiation efficiency and crosslinking degree, which ensures a complete crosslinking effect of an entire surface of a separator and greatly improves a breakage temperature of a separator. In addition, when the weight proportion of the photoinitiator in the coating liquid is controlled in the above range, a content of the photoinitiator remaining in an adhesive coating layer will not be too high, such that the photoinitiator will not affect a surface resistance of a separator and thus will not affect an interfacial resistance of a battery.

In a further preferred solution, in the coated separator provided by the present disclosure, a weight proportion of the photoinitiator in the adhesive coating layer is controlled at 0.05 wt% to 0.3 wt%, such that a breakage temperature of the separator is improved without affecting a surface resistance of the separator.

In a further preferred solution, in the coating liquid and the preparation method of the coated separator provided by the present disclosure, the adhesive coating layer is discontinuously coated on the ceramic layer at intervals, that is, the adhesive coating layer is discontinuously distributed on the ceramic layer at intervals to be strip-shaped. Compared with continuous full coating, the discontinuous coating allows a better penetration effect due to a capillary action, such that the photoinitiator can better penetrate into the separator substrate layers (the ceramic layer and membrane) after the coating liquid is coated on the membrane.

### BRIEF DESCRIPTION OF THE DRAWINGS

The present disclosure is further illustrated below in conjunction with accompanying drawings and specific embodiments.
FIG. 1 is a first schematic diagram of a structure of a coated separator provided in an embodiment of the present disclosure;
FIG. 2 is a second schematic diagram of a structure of a coated separator provided in an embodiment of the present disclosure;
FIG. 3 is a third schematic diagram of a structure of a coated separator provided in an embodiment of the present disclosure;
FIG. 4 is a fourth schematic diagram of a structure of a coated separator provided in an embodiment of the present disclosure;
FIG. 5 is a schematic flow chart of a preparation method of a coated separator provided in an embodiment of the present disclosure;
FIG. 6A is a first scanning electron microscopy (SEM) image of a coated separator prepared by a preparation method of a coated separator provided in an embodiment of the present disclosure;
FIG. 6B is a local SEM image of an adhesive coating layer in FIG. 6A;
FIG. 6C is a second SEM image of a coated separator prepared by a preparation method of a coated separator provided in an embodiment of the present disclosure; and
FIG. 7 is a schematic diagram of a fitting curve of a surface resistance test of a separator.

### DETAILED DESCRIPTION OF THE EMBODIMENTS

The technical solutions in the embodiments of the present disclosure will be clearly and completely described below. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Before providing the present disclosure, the applicants have conducted a series of studies and experiments for the existing separators.

In order to ensure heat resistance, a first way is to adopt a CCS + NIPS layered coating process, that is, a ceramic layer is first coated on one or two sides of a PP or PE or PP/PE/PP membrane to ensure the heat resistance, and then an adhesive resin is coated on the ceramic layer to meet the bonding strength performance. However, a separator product prepared by the CCS + NIPS layered coating process still has a limited breakage temperature.

A second way is to adopt an organic solvent coating process, that is, a highly heat-resistant adhesive resin (such as PEI) and a photoinitiator are coated on a membrane, and then UV crosslinking is conducted. However, a separator product prepared by the conventional organic solvent coating process has poor comprehensive performance.

In order to solve the problem that the existing separators have poor heat resistance, the applicants conduct a series of theoretical studies and experimental verifications. For example, the applicants try to replace the conventional highly heat-resistant adhesive resin with an ultra-highly heat-resistant adhesive resin (such as PEI), but it leads to insignificant improvement of heat resistance.

As a further research approach, the applicants try to change a content of an adhesive polymer resin, but it leads to insignificant improvement of heat resistance.

Therefore, the technical solution of the present disclosure is obtained through a series of studies and experiments in view of the above-mentioned problems of the layered coating process and the organic solvent coating process, and is intended to solve the problem of how to improve heat resistance of a separator.

Through experimental verification and analysis, the applicants combine advantages of the CCS + NIPS layered coating process and the organic solvent coating process to creatively provide a novel preparation method of a coated separator. The novel preparation method of the coated separator includes: a ceramic layer is first coated on one or two sides of a PP or PE or PP/PE/PP membrane, then an adhesive polymer resin slurry including a photoinitiator is coated on the ceramic layer, and a resulting product is irradiated under UV light to initiate a crosslinking reaction to obtain the corresponding coated separator. This preparation method has advantages of both the CCS + NIPS layered coating process and the organic solvent coating process, and can improve the heat resistance and breakage temperature of a separator. However, this preparation method still leads to insignificant improvement of heat resistance of a separator. The applicants have found through further research and experiments that an amount of the photoinitiator added is very important to performance of a separator product. If the amount of the photoinitiator added is too large, a resulting separator product will undergo side reactions during a working process, which will affect the performance of the separator product. If the amount of the photoinitiator added is too small, an amount of the photoinitiator penetrating into the ceramic layer will not be enough, and the crosslinking reaction will not be sufficient, which will affect the heat resistance of a separator product. In addition, a coating manner of the adhesive polymer resin slurry (such as continuous full coating and discontinuous coating) also has an impact on the production cost and comprehensive performance of a product to some extent.

In view of this, the applicants optimize a content of the photoinitiator and the coating manner of the liquid on the basis of combining the advantages of the CCS + NIPS layered coating process and the organic solvent coating process. It should be noted that the discovery and research processes of the above-mentioned technical problems should also be regarded as factors determining the inventiveness of the present disclosure.

The technical solutions of the present disclosure will be described in detail below with reference to specific embodiments. The following specific embodiments may be combined with each other, and the same or similar concepts or processes may not be repeatedly described in some embodiments.

An embodiment of the present disclosure provides a coating liquid, including: a solvent, an adhesive polymer resin, and a photoinitiator, where a weight proportion of the photoinitiator in the coating liquid is 0.08 wt% to 1.0 wt%; and the adhesive polymer resin includes one or a combination of two or more of a PVDF-based adhesive polymer resin, PI, PEI, and PMMA.

The PVDF-based adhesive polymer resin includes one or a combination of two or more of a PVDF homopolymer, PVDF-HFP, PVDF-TFE-P, and PVDF-TFE-CTFE.

An amount of the adhesive polymer resin added is 5 wt% to 30 wt%. For example, the amount of the adhesive polymer resin added may be any value of or may be in a range between any two values of 5 wt%, 10 wt%, 15 wt%, 20 wt%, 25 wt%, 28 wt%, and 30 wt%. Of course, it should be noted that the present disclosure is not limited thereto, and other amounts of the adhesive polymer resin added are also within the protection scope of the present disclosure, as long as a weight proportion of the photoinitiator in the liquid is 0.08 wt% to 1.0 wt%.

It should be noted that, on the basis of the conventional PVDF-based adhesive polymer resin, polymers such as PI, PEI, and PMMA are also adopted as the adhesive polymer resin in the present disclosure, and these polymers have superstrong bonding strength, ultra-high heat resistance, and excellent electrochemical performance, which is conducive to improvement of comprehensive performance of a product.

The photoinitiator includes one or a combination of two of ITX and benzophenone. An amount of the photoinitiator added is closely related to performance of a separator. If the amount of the photoinitiator added is too small, a degree of crosslinking curing will be insufficient, and the improvement of a breakage temperature may not reach an expected level. If the amount of the photoinitiator added is too large, a large amount of the photoinitiator will remain in a separator, and a cost will be increased. In the existing process, an actual amount of the photoinitiator added is usually 1.0 wt% or more. In the present disclosure, through research on a mechanism of the photoinitiator in combination with performance of a product, it is determined that the weight proportion of the photoinitiator in the liquid is 0.08 wt% to 1.0 wt%. A weight proportion of the photoinitiator in an adhesive coating layer formed by coating the liquid is 0.05 wt% to 0.3 wt%. In this case, a product has the optimal performance.

For example, the amount of the photoinitiator added to the liquid may be any value of or may be in a range between any two values of 0.08 wt%, 0.1 wt%, 0.2 wt%, 0.3 wt%, 0.4 wt%, 0.5 wt%, 0.6 wt%, 0.7 wt%, 0.8 wt%, 0.9 wt%, and 1.0 wt%.

In some embodiments, the solvent is N-methylpyrrolidone (NMP).

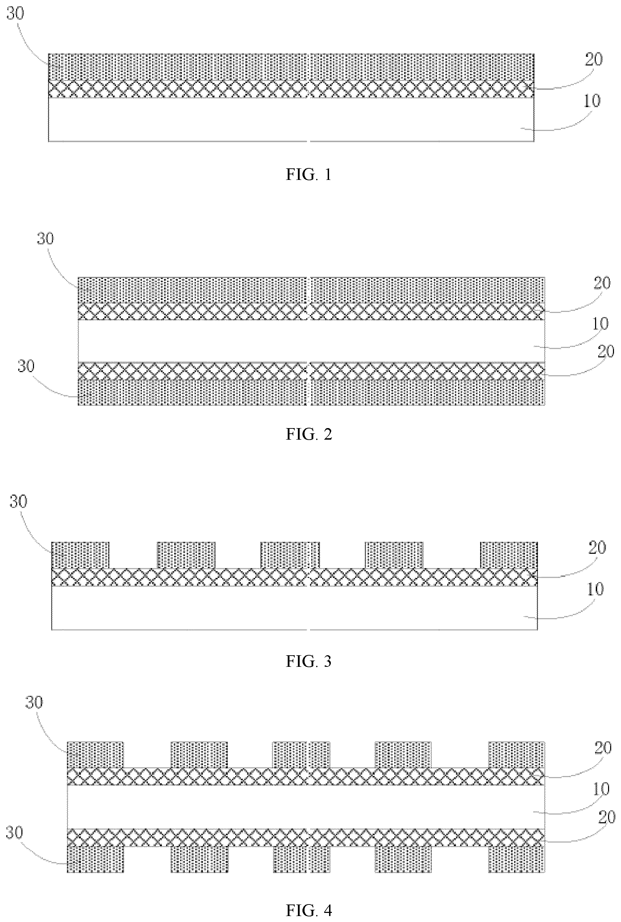

As shown in FIG. 1 to FIG. 4, the present disclosure also provides a coated separator, including membrane 10, ceramic layer 20, and adhesive coating layer 30, where the ceramic layer 20 is coated on one (as shown in FIG. 1 and FIG. 3) or two (as shown in FIG. 2 and FIG. 4) sides of the membrane; and the adhesive coating layer 30 is coated on the ceramic layer 20, and the adhesive coating layer 30 is formed by coating the coating liquid described in the first aspect and optional solutions thereof.

A weight proportion of the photoinitiator in the adhesive coating layer 30 is 0.05 wt% to 0.3 wt%. The photoinitiator can quickly and uniformly penetrate into separator substrate layers (the ceramic layer 20 and the membrane 10) with the solvent at the moment when the liquid is coated on the ceramic layer, so as to ensure that enough reactive free radicals are produced by the photoinitiator in the membrane, the ceramic layer, and a combined interface layer to allow sufficient photoinitiation efficiency and crosslinking degree, which ensures a complete crosslinking effect of the entire surface of the separator and maximizes a breakage temperature of the separator. In addition, a content of the photoinitiator in the entire adhesive coating layer is controlled at 0.05 wt% to 0.3 wt% (for example, the content of the photoinitiator in the adhesive coating layer may be any value of or may be in a range between any two values of 0.05%, 0.15%, 0.18%, 0.25%, 0.29%, and 0.3%). The applicants have found through research that, when the content of the photoinitiator in the adhesive coating layer is in the above range, enough reactive free radicals can be produced to improve the photoinitiation efficiency and crosslinking degree and maximize the breakage temperature of the separator without affecting a surface resistance of the separator. If the content of the photoinitiator in the adhesive coating layer is higher than the above range, the surface resistance of the separator will be increased significantly, which affects an interfacial resistance of a battery. If the content of the photoinitiator in the adhesive coating layer is lower than the above range, the crosslinking degree of the separator will be insufficient, and the breakage temperature will not be improved.

In addition, the applicants have also found that, when the weight proportion of the photoinitiator in the adhesive coating layer 30 is 0.05 wt% to 0.3 wt%, a coating manner of the liquid also plays a very important role because a coverage rate of the adhesive coating layer is closely related to physical properties of the separator. The higher the coverage rate, the higher the bonding strength of a surface layer of the separator and the larger the amount of the photoinitiator introduced. The higher the coverage rate, the lower the porosity, the greater the gas permeability increment, and the lower the wetting speed of an electrolyte. Thus, it is necessary to comprehensively consider the physical properties of the separator and the control of an amount of the photoinitiator introduced.

Based on this, in a specific embodiment, the adhesive coating layer 30 is continuously coated on an entire surface of the ceramic layer 20, as shown in FIG. 1 and FIG. 2.

In a specific embodiment, the adhesive coating layer 30 is discontinuously coated on the ceramic layer 20 at intervals, and thus the adhesive coating layer 30 is discontinuously distributed on the ceramic layer 20 at intervals to be strip-shaped, as shown in FIG. 3 and FIG. 4.

As a specific embodiment, a ratio of an area of the strip-shaped adhesive coating layer to an area of the intervals is 1:1 to 5:1, and the intervals each refer to a gap between two adjacent strip-shaped adhesive coating layers. Specifically, the ratio can be, for example, 1:1, 2:1, 3:1, 4:1, or 5:1. When the adhesive coating layer 30 is discontinuously distributed on the ceramic layer 20 in strip-shaped form, a capillary action can be fully utilized to increase the wettability of the solvent, such that the solvent well penetrates into the separator substrate layers. In addition, the discontinuous coating reduces the consumption of the coating liquid to reduce a production cost, and can still lead to bonding strength meeting a design requirement, such as a bonding strength higher than or equal to 15 gf/25 mm.

A material of the ceramic layer 20 includes an inorganic material, an acrylate adhesive, a PAA adhesive, a dispersing agent, a wetting agent, a thickening agent, and a defoaming agent. Specifically, the inorganic material includes one or a combination of two or more of silica, alumina, boehmite, titanium oxide, magnesium oxide, and a nanofiber.

The membrane is a PP membrane or a PE membrane or a PP/PE/PP composite membrane. A thickness of the substrate is 5 µm to 20 µm. As an optional embodiment, a thickness of the ceramic layer 20 is 1 µm to 6 µm, for example, and a thickness of the adhesive coating layer 30 is 0.5 µm to 3 µm, for example. When the adhesive coating layer 30 is discontinuously distributed on the ceramic layer 20 at intervals to be strip-shaped, the thickness of the adhesive coating layer 30 is preferably 0.5 µm to 2 µm, such that a desired amount of the photoinitiator penetrates into the separator substrate layers.

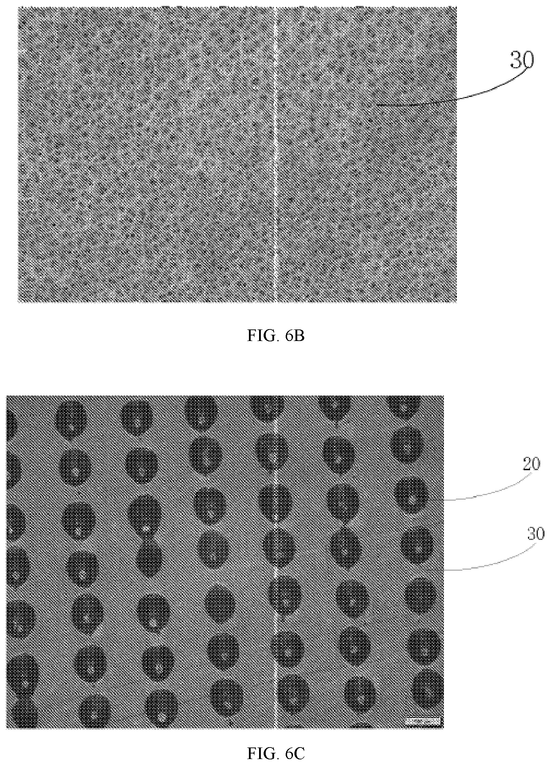

Of course, during the discontinuous coating, the discontinuous distribution of the adhesive coating layer on the ceramic layer at intervals in strip-shaped form is merely an embodiment of the present disclosure. The discontinuous coating is not limited to the strip-shaped coating. In other embodiments, the discontinuous coating can also be dot-shaped gap coating, that is, the adhesive coating layer 30 is discontinuously distributed on the ceramic layer 20 with a dot-shaped gap. An SEM image of a surface of a separator obtained based on the dot-shaped gap coating is shown in FIG. 6C.

The present disclosure provides a coating liquid and a coated separator, and a weight proportion of a photoinitiator in the coating liquid is controlled at 0.08 wt% to 1.0 wt%. When the weight proportion of the photoinitiator in the coating liquid is controlled in the above range, the photoinitiator can well penetrate into separator substrate layers (a ceramic layer and a membrane) after the coating liquid is coated on the membrane to ensure that enough reactive free radicals are produced by the photoinitiator in the membrane, the ceramic layer, and a combined interface layer to allow sufficient photoinitiation efficiency and crosslinking degree, which ensures a complete crosslinking effect of an entire surface of a separator and greatly improves a breakage temperature of a separator. In addition, when the weight proportion of the photoinitiator in the coating liquid is controlled in the above range, a content of the photoinitiator remaining in an adhesive coating layer will not be too high, such that the photoinitiator will not affect a surface resistance of a separator and thus will not affect an interfacial resistance of a battery.

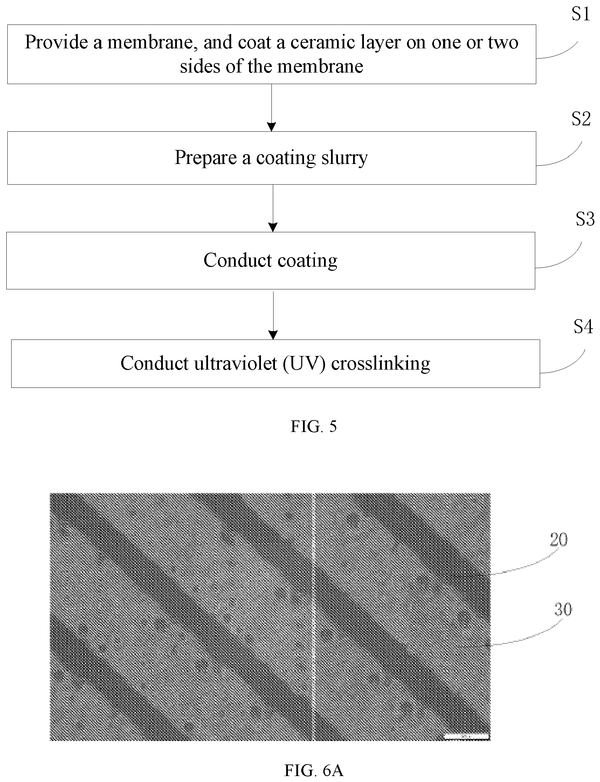

As shown in FIG. 5, the present disclosure also provides a preparation method of the coated separator described above, including the following steps:
S1: the membrane is provided, and the ceramic layer is coated on one or two sides of the membrane;
S2: preparation of the coating liquid: 5 wt% to 30 wt% of the adhesive polymer resin and 0.08 wt% to 1.0 wt% of the photoinitiator are added to the solvent, and full dissolution is allowed to obtain the coating liquid;
S3: coating: the coating liquid is coated on the ceramic layer to form the adhesive coating layer on the ceramic layer to obtain a coated membrane; and
S4: UV crosslinking: the coated membrane is irradiated under UV light to initiate a crosslinking reaction to obtain the coated separator.

In some embodiments, in the S3, the coating refers to continuous full coating, and specifically, the coating liquid is continuously coated on an entire surface of the ceramic layer to form the adhesive coating layer on the entire surface of the ceramic layer.

In some embodiments, in the S3, the coating refers to discontinuous coating, and specifically, the coating liquid is discontinuously coated on the ceramic layer at intervals to be strip-shaped or dot-shaped to form the adhesive coating layer discontinuously distributed on the ceramic layer in strip-shaped form or dot-shaped form. When the adhesive coating layer is discontinuously coated on the ceramic layer at intervals to be strip-shaped or a dot-shaped gap, that is, the adhesive coating layer is discontinuously distributed on the ceramic layer in the strip-shaped form or dot-shaped form, the discontinuous coating allows a better penetration effect due to a capillary action compared with continuous full coating, such that the photoinitiator can better penetrate into the separator substrate layers (the ceramic layer and membrane) after the coating liquid is coated on the membrane.

The LIB separator obtained through gap coating and UV crosslinking in the present disclosure has ultra-high heat resistance, a thermal shrinkage rate of less than 5% at 150°C * 30 min, and an ultra-high breakage temperature of higher than 180°C, which further improve the safety performance of the separator.

In some embodiments, the UV light has a wavelength of 210 nm to 420 nm and an intensity of 50 mj/cm² or more, and the UV crosslinking is conducted for 0.001 s to 10 s. A photoinitiator or a photoinitiator combination can rapidly produce reactive free radicals under UV excitation, and the reactive free radicals can further initiate the generation of reactive groups, dangling bonds, and free radicals from active groups in the membrane layer, the ceramic layer, the adhesive polymer resin layer, and combined interface layers to trigger a grafting reaction and a crosslinking reaction, thereby producing a macromolecular network structure. The macromolecular network structure produced due to the grafting reaction and the crosslinking reaction provides a strong support framework for the separator to allow a high breakage temperature and high heat resistance.

The wavelength of the UV light fluctuates in a specified range. Therefore, in other embodiments, the wavelength of the UV light can be in ranges of 210 nm to 310 nm, 250 nm to 390 nm, and 280 nm to 420 nm. When the wavelength of the UV light is fixed, the time of the UV crosslinking and the intensity of the UV light have great impacts on a crosslinking effect. Because the formula includes inorganic particles with a specified shielding effect on UV light, a crosslinking effect is poor when the intensity of the UV light is lower than 50 mj/cm².

FIG. 6A and FIG. 6B show SEM images of a surface of a coated separator prepared by a preparation method of a coated separator in an embodiment of the present disclosure based on discontinuous coating. It can be clearly seen from FIG. 6A that the adhesive coating layer 30 is distributed on the ceramic layer 20 at intervals to be strip-shaped. It can be seen from FIG. 6B that the adhesive coating layer is a surface coating layer full of pores on a surface, which can increase an uptake rate of an electrolyte, the permeability of an electrolyte, and a transmission rate of lithium ions and reduce a gas permeability.

The present disclosure also provides a battery, including a coated separator, a positive electrode, a negative electrode, and an electrolyte, where the coated separator is the coated separator described above.

The performance of products in some embodiments of the present disclosure will be analyzed below through experiments.

### Example 1

S1: A membrane was provided, and a ceramic layer was coated on one or two sides of the membrane. Specifically, a ceramic material was added to a solvent, and full dissolution was allowed to obtain a ceramic liquid; and the ceramic liquid was then coated on one or two sides of the membrane.

S2: Preparation of a coating liquid: 5 wt% to 30 wt% of an adhesive polymer resin and 0.4 wt% of a photoinitiator were added to a solvent, and full dissolution was allowed to obtain the coating liquid.

S3: Coating: The coating liquid was discontinuously coated on the ceramic layer at intervals to be strip-shaped to form an adhesive coating layer discontinuously distributed on the ceramic layer in strip-shaped form to obtain a coated membrane. A content of the photoinitiator in the adhesive coating layer was 0.25 wt%. A ratio of an area of the strip-shaped adhesive coating layer to an area of the intervals was 5:1.

S4: UV crosslinking: The coated membrane was irradiated under UV light to initiate a crosslinking reaction to obtain a coated separator.

**In** this example, the membrane was a PP membrane with a thickness of 10.4 µm; the ceramic material was alumina; the ceramic layer was coated on two sides of the membrane; and the photoinitiator was ITX.

### Example 2

Example 2 was different from Example 1 in that: the ratio of the area of the strip-shaped adhesive coating layer to the area of the intervals was 4:1, and the content of the photoinitiator in the adhesive coating layer was 0.18 wt%. Other aspects of Example 2 were the same as those in Example 1 and would not be repeated here.

### Example 3

Example 3 was different from Example 1 in that: the ratio of the area of the strip-shaped adhesive coating layer to the area of the intervals was 3:1, and the content of the photoinitiator in the adhesive coating layer was 0.11 wt%. Other aspects of Example 3 were the same as those in Example 1 and would not be repeated here.

### Example 4

Example 4 was different from Example 1 in that: the ratio of the area of the strip-shaped adhesive coating layer to the area of the intervals was 2:1, and the content of the photoinitiator in the adhesive coating layer was 0.1 wt%. Other aspects of Example 4 were the same as those in Example 1 and would not be repeated here.

### Example 5

Example 5 was different from Example 1 in that: the ratio of the area of the strip-shaped adhesive coating layer to the area of the intervals was 1:1, and the content of the photoinitiator in the adhesive coating layer was 0.06 wt%. Other aspects of Example 5 were the same as those in Example 1 and would not be repeated here.

### Example 6

Example 6 was different from Example 1 in that: a content of the photoinitiator in the coating liquid was 0.8 wt%, and the content of the photoinitiator in the adhesive coating layer was 0.29 wt%. Other aspects of Example 6 were the same as those in Example 1 and would not be repeated here.

### Example 7

Example 7 was different from Example 1 in that: the ratio of the area of the strip-shaped adhesive coating layer to the area of the intervals was 1:1, a content of the photoinitiator in the coating liquid was 0.9 wt%, and the content of the photoinitiator in the adhesive coating layer was 0.12 wt%. Other aspects of Example 7 were the same as those in Example 1 and would not be repeated here.

### Example 8

Example 8 was different from Example 1 in that: the discontinuous coating was replaced with continuous full coating, that is, the adhesive coating layer covered an entire surface of the ceramic layer and the area ratio of the adhesive coating layer to the gap was 1:0; a content of the photoinitiator in the coating liquid was 0.10 wt%; and the content of the photoinitiator in the adhesive coating layer was 0.08 wt%. Other aspects of Example 8 were the same as those in Example 1 and would not be repeated here.

### Example 9

Example 9 was different from Example 1 in that: the discontinuous coating was replaced with continuous full coating, that is, the adhesive coating layer covered an entire surface of the ceramic layer and the area ratio of the adhesive coating layer to the gap was 1:0; and the content of the photoinitiator in the adhesive coating layer was 0.39 wt%. Other aspects of Example 9 were the same as those in Example 1 and would not be repeated here.

### Example 10

Example 10 was different from Example 6 in that: the discontinuous coating was replaced with continuous full coating, that is, the adhesive coating layer covered an entire surface of the ceramic layer and the area ratio of the adhesive coating layer to the gap was 1:0; and the content of the photoinitiator in the adhesive coating layer was 0.78 wt%. Other aspects of Example 10 were the same as those in Example 6 and would not be repeated here.

### Example 11

Example 11 was different from Example 7 in that: the discontinuous coating was replaced with continuous full coating, that is, the adhesive coating layer covered an entire surface of the ceramic layer and the area ratio of the adhesive coating layer to the gap was 1:0; and the content of the photoinitiator in the adhesive coating layer was 0.85 wt%. Other aspects of Example 11 were the same as those in Example 7 and would not be repeated here.

### Comparative Example 1

Comparative Example 1 was different from Example 1 in that: the discontinuous coating was replaced with continuous full coating, that is, the adhesive coating layer covered an entire surface of the ceramic layer and the area ratio of the adhesive coating layer to the gap was 1:0; and the content of the photoinitiator in the adhesive coating layer was 0.38 wt%. Other aspects of Comparative Example 1 were the same as those in Example 1 and would not be repeated here.

### Comparative Example 2

Comparative Example 2 was different from Example 1 in that: the ratio of the area of the strip-shaped adhesive coating layer to the area of the intervals was 1:1, a content of the photoinitiator in the coating liquid was 0.04 wt%, and the content of the photoinitiator in the adhesive coating layer was 0.03 wt%. Other aspects of Comparative Example 2 were the same as those in Example 1 and would not be repeated here.

### Comparative Example 3

Comparative Example 3 was different from Example 1 in that: the ratio of the area of the strip-shaped adhesive coating layer to the area of the intervals was 1:1, a content of the photoinitiator in the coating liquid was 3.0 wt%, and the content of the photoinitiator in the adhesive coating layer was 2.80 wt%. Other aspects of Comparative Example 3 were the same as those in Example 1 and would not be repeated here.

Table 1 shows the performance of corresponding separators obtained in Examples 1 to 11 and Comparative Examples 1 to 3.

A test method of a load was specifically as follows: A load test was conducted by an electronic balance weighing method, which was specifically as follows:
A surface density of a separator coated with a ceramic layer was first tested as follows: the separator coated with the ceramic layer was taken and cut into a sample with a length of 297 mm and a width of 210 mm; then the sample was rolled into a ball and weighed on a weight scale, and a measured weight m₁ was recorded; and then the surface density M₁ (unit: g/m₂) was calculated according to the following formula: Ps = M/(length * width * 10⁻⁶). According to the same method as above, a surface density M₂ of a separator coated with both the ceramic layer and an adhesive coating layer was tested.

A load was calculated as follows: M₂-M₁.

A test method of a thermal shrinkage rate at 150°C * 30 min was specifically as follows: a separator was cut along horizontal and longitudinal directions of the separator to obtain a sample with a size of 50 mm * 50 mm; then the sample was sandwiched between A4 papers with 5 upper A4 papers and 5 lower A4 papers; then a temperature of an oven was set to 150°C, a temperature inside the oven was allowed to increase to the set temperature, and the oven was fully preheated to ensure that the temperature inside the oven stably reached the set temperature; the sample sandwiched between the A4 papers was quickly placed together with the A4 papers in the oven with the sample arranged right in the middle of an upper layer of the oven, and then a door of the oven was closed immediately; a test time was set to 30 min according to a test requirement, and a corresponding test was conducted; after the test was completed, the sample was taken out from the oven, cooled to room temperature, and gently spread, and a distance between horizontal/longitudinal edges of the separator was measured; and data were recorded, and the thermal shrinkage rate was calculated according to the following calculation formula: thermal shrinkage rate (%) = (initial distance between markers - distance between makers after heating)/initial distance between markers × 100%.

An uptake rate was used to characterize an adsorption capacity of a separator for an electrolyte. A test method of the uptake rate was as follows: a separator was cut into a sample with a size of 150 mm * 150 mm (s = 0.0225 m²); the sample was weighed, and a measured weight m₁ was recorded; the sample was soaked in an electrolyte for 1 h, then taken out, and wiped with a paper towel to remove the excess electrolyte; a resulting sample was weighed, and a measured weight m₂ was recorded; and an uptake rate (unit: g/m²) was calculated as follows: uptake rate = (m₂-m₁)/s.

A test method of bonding strength was as follows: a separator to be tested and an electrode sheet were cut into standard sample strips (the separator: 25 mm * 180 mm, and the electrode sheet: 20 mm * 150 mm), and a hot-press shaping machine was used to bond a standard sample strip of the separator to a standard sample strip of the electrode sheet at a specified pressure and 60°C; and then one end of the standard sample strip of the electrode sheet and an end of the standard sample strip of the separator corresponding to the other end of the standard sample strip of the electrode sheet each were clamped with a fixture, and a tensile force was applied until a stroke of a tensile machine was completed, Parameters of the tensile machine were set as follows: positioning shift: 150 mm, and test speed: 300 mm/min.

A breakage temperature of a separator was determined by a thermomechanical analysis (TMA) test as follows: a specified force was applied to the separator to allow a tension of the separator (which was intended to simulate a state inside a battery), and then the separator was gradually heated to the breakage temperature.

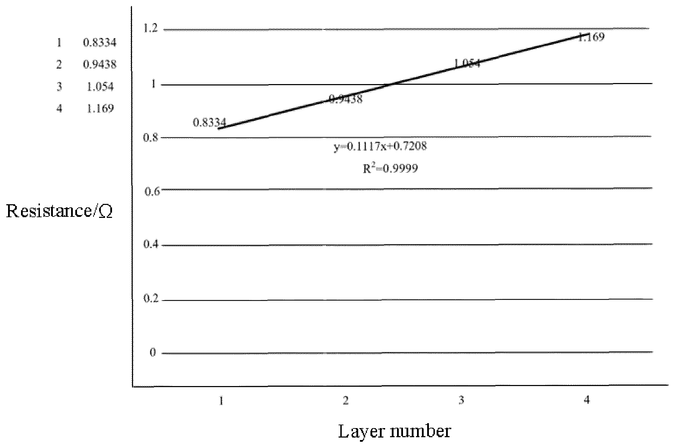

A surface resistance of a separator was tested by an electrochemical workstation, specifically including the following steps:
(1) Sample preparation: The separator to be tested was folded neatly, and then cut into 4 round sheet-shaped samples each with a diameter of 47 mm.
(2) The round sheet-shaped samples each were soaked in an electrolyte in a sealed state for 1 h.
(3) A test module was connected with the electrochemical workstation, and resistance spectrum test software in the electrochemical workstation was opened to allow a resistance test of a first layer to obtain a resistance value R₁ of the first layer.
(4) Second, third, and fourth layers were placed in the electrochemical workstation successively, and corresponding resistance spectra of the second, third, and fourth layers were measured to obtain resistance values R₂, R₃, and R₄, respectively.
(5) With a layer number as an x-coordinate and a resistance value of a corresponding layer as a y-coordinate, a curve was plotted, and a slope A and a linear fitting degree of the curve each were calculated. When the linear fitting degree was greater than 0.999, a test result was valid, otherwise the test was repeated. An exemplary fitting curve is shown in FIG. 7.

A calculation formula of a surface resistance value R of a separator is as follows: R = A.S,
where R represents a surface resistance of a sample (Ω.cm²); A represents the slope of the curve; and S represents a test area of a separator (cm²), and the test area of a separator refers to an effective electrode area = 9.616 cm².

A calculation formula of an ionic conductivity σ is as follows: σ = d/R,
where σ represents an ionic conductivity (S/cm) and d represents a thickness of a separator (cm).

**Table 1**

| Item | Ratio of an area of the strip-shaped adhesive coating layer to an area of the intervals | Content of a photoinitiator in a coating liquid | Content of a photoinitiator in an adhesive coating layer | Load (g/m²) | Thermal shrinkage rate at 150°C * 30 min (%) | | Uptake rate (g/m²) | Bonding strength (gf/25mm) | | Breakage temperature tested by TMA (°C) | | Surf ace resis tanc e (Ω.c m²) |
|---|---|---|---|---|---|---|---|---|---|---|---|---|
| | | | | | M D | TD | | Sid e A | Sid e B | MD | TD | |
| Example 1 | 5:1 | 0.4% | 0.25% | 1.0 | 2.3 | 0.8 | 5.8 | 45.0 | 48.0 | 230 | 220 | 1.3 |
| Example 2 | 4:1 | 0.4% | 0.18% | 0.9 | 2.0 | 0.8 | 6.3 | 43.0 | 46.0 | 223 | 210 | 1.2 |
| Example 3 | 3:1 | 0.4% | 0.11% | 0.8 | 2.1 | 0.0 | 6.5 | 40.0 | 43.0 | 220 | 219 | 1.3 |
| Example 4 | 2:1 | 0.4% | 0.10% | 0.8 | 2.5 | 0.3 | 6.5 | 40.5 | 44.0 | 219 | 210 | 1.0 |
| Example 5 | 1:1 | 0.4% | 0.06% | 0.7 | 3.0 | 1.0 | 7.9 | 39.0 | 41.0 | 215 | 201 | 1.0 |
| Example 6 | 5:1 | 0.8% | 0.29% | 1.0 | 2.5 | 0.7 | 6.3 | 44.0 | 42.0 | 239 | 225 | 1.3 |
| Example 7 | 1:1 | 0.9% | 0.12% | 0.7 | 2.8 | 0.8 | 6.9 | 43.0 | 39.0 | 221 | 209 | 1.1 |
| Example 8 | 1:0 | 0.10% | 0.08% | 1.5 | 2.8 | 1.0 | 6.5 | 42.0 | 45.0 | 216 | 205 | 1.2 |
| Example 9 | 1:0 | 0.4% | 0.39% | 1.5 | 2.6 | 1.5 | 6.4 | 38.0 | 35.0 | 223 | 215 | 1.9 |
| Example 10 | 1:0 | 0.8% | 0.78% | 1.5 | 2.3 | 1.6 | 6.2 | 39.0 | 29.0 | 219 | 204 | 2.1 |
| Example 11 | 1:0 | 0.9% | 0.85% | 1.5 | 2.5 | 1.0 | 6.3 | 38.0 | 25.0 | 221 | 215 | 2.3 |
| Comparative Example 1 | 1:0 | 0.4% | 0.38% | 1.5 | 2.5 | 2.0 | 4.7 | 46.0 | 49.0 | 219 | 210 | 2.5 |
| Comparative Example 2 | 1:1 | 0.04% | 0.03% | 0.7 | 3.1 | 1.2 | 6.7 | 39.5 | 45.0 | 151 | 150 | 1.0 |
| Comparative Example 3 | 1:1 | 3.0% | 2.80% | 0.7 | 3.0 | 1.2 | 6.5 | 29.1 | 20.1 | 210 | 209 | 2.4 |

It can be seen from Table 1 that the present disclosure greatly improves the overall heat resistance of a separator, and the products in Examples 1 to 8 each have a thermal shrinkage rate of less than 4% at 150°C * 30 min and a breakage temperature of 200°C or higher, indicating excellent overall performance of the products.

It can be seen from comparison of Examples 1 to 7 with Examples 8 to 11 that, when a content of the photoinitiator in the coating liquid is within the content range of the present disclosure, the separators obtained through continuous full coating have uptake rates (wettability) mostly of 6.2 g/m² to 6.5 g/m² and surface resistance values mostly of 1.2 Ω.cm² to 2.3 Ω.cm², and the separators obtained through discontinuous coating have uptake rates (wettability) mostly of 6.3 g/m² to 7.0 g/m² and surface resistance values mostly of 1.0 Ω.cm² to 1.4 Ω.cm². In particular, it can be seen from comparison of Example 6 with Example 10 and comparison of Example 7 with Example 11 that the discontinuous coating leads to a lower production cost, a higher uptake rate (wettability), a significantly-lower surface resistance, and better bonding strength than the continuous full coating, and thus makes a product have superior comprehensive performance.

It can be seen from comparison of Examples 1 to 8 with Comparative Example 2 that, when a content of the photoinitiator in the coating liquid is lower than a minimum value of the content range of the present disclosure and a content of the photoinitiator in the adhesive coating layer is lower than a minimum value of the content range of the present disclosure, a breakage temperature of a separator is significantly reduced, for example, a breakage temperature of the product in Comparative Example 2 is reduced to about 150°C. It can be seen from comparison of Examples 1 to 8 with Comparative Example 3 that, when a content of the photoinitiator in the coating liquid is higher than a maximum value of the content range of the present disclosure and a content of the photoinitiator in the adhesive coating layer is higher than a maximum value of the content range of the present disclosure, the bonding strength is significantly reduced, and a surface resistance of a separator is significantly increased, for example, a bonding strength of a side A of the separator in Comparative Example 2 is reduced to 30 gf/25 mm or less, a bonding strength of a side B of the separator is reduced to 20.1 gf/25 mm, and a surface resistance of the separator reaches 2.4 Ω.cm². In summary, it can be seen that the content range of the photoinitiator in the coating liquid and the content range of the photoinitiator in the adhesive coating layer in the present disclosure can optimize the performance of a separator product.

In the description of this specification, the description with reference to the terms such as "one embodiment", "an embodiment", "a specific embodiment", or " an example" means that the specific features, structures, materials, or characteristics described with reference to the embodiment or example are included in at least one embodiment or example of the present disclosure. In this specification, the schematic representations of the above terms do not necessarily refer to the same embodiment or example. In addition, the specific features, structures, materials, or characteristics described may be combined in any suitable manner in any one or more embodiments or examples.

Finally, it should be noted that the above examples are merely intended to describe the technical solutions of the present disclosure, rather than to limit the present disclosure. Although the present disclosure is described in detail with reference to the above examples, persons of ordinary skill in the art should understand that modifications may be made to the technical solutions described in the above examples.

## Claims

1. A coating liquid, comprising: a solvent, an adhesive polymer resin, and a photoinitiator, wherein the adhesive polymer resin comprises one or a combination of at least two of a polyvinylidene fluoride (PVDF)-based adhesive polymer resin, a polyimide (PI), a polyetherimide (PEI), and polymethylmethacrylate (PMMA); **characterized in that** a weight proportion of the photoinitiator in the coating liquid is 0.08 wt% to 1.0 wt%; and the solvent is N-methylpyrrolidone (NMP).

2. The coating liquid according to claim 1, wherein the PVDF-based adhesive polymer resin comprises one or a combination of at least two of a PVDF homopolymer, poly(vinylidene fluoride-co-hexafluoropropylene) (PVDF-HFP), poly(vinylidene fluoride-tetrafluoroethylene-propylene) (PVDF-TFE-P), and poly(vinylidene fluoride-trifluoroethylene-chlorotrifluoroethylene) (PVDF-TFE-CTFE).

3. The coating liquid according to claim 1, wherein the photoinitiator comprises one or a combination of two of isopropylthioxanthone (ITX) and benzophenone.

4. A coated separator, comprising a membrane (10), a ceramic layer (20), and an adhesive coating layer (30), wherein the ceramic layer (20) is coated on one or two sides of the membrane (10); and the adhesive coating layer (30) is coated on the ceramic layer (20), and the adhesive coating layer (30) is formed by coating the coating liquid according to any one of claims 1 to 3.

5. The coated separator according to claim 4, wherein a weight proportion of the photoinitiator in the adhesive coating layer (30) is 0.05 wt% to 0.3 wt%.

6. The coated separator according to claim 5, wherein the adhesive coating layer (30) is distributed on the ceramic layer (20) at intervals.

7. The coated separator according to claim 6, wherein a ratio of an area of the adhesive coating layer (30) to an area of the intervals is 1:1 to 5:1, and the intervals each refer to a gap between two adjacent adhesive coating layers (30).

8. The coated separator according to claim 4, wherein the ceramic layer (20) comprises an inorganic material, and the inorganic material is one or a combination of at least two of silica, alumina, boehmite, titanium oxide, magnesium oxide, or a nanofiber.

9. The coated separator according to claim 4, wherein the coated separator has a bonding strength of higher than or equal to 15 gf/25 mm, a breakage temperature of higher than 180°C, and a surface resistance of 1.4 Ω.cm² or less;
the bonding strength is measured by tensile machine, the breakage temperature is determined by a thermomechanical analysis (TMA) test, and the surface resistance is tested by an electrochemical workstation.

10. A preparation method of the coated separator according to any one of claims 4 to 8 or claim 9, comprising the following steps:
(1) providing the membrane (10), and coating the ceramic layer (20) on one or two sides of the membrane (10);
(2) preparation of the coating liquid: adding 5 wt% to 30 wt% of the adhesive polymer resin and 0.08 wt% to 1.0 wt% of the photoinitiator to the solvent, and allowing full dissolution to obtain the coating liquid, wherein the solvent is N-methylpyrrolidone (NMP);
(3) coating: coating the coating liquid on the ceramic layer (20) to form the adhesive coating layer (30) on the ceramic layer (20) to obtain a coated membrane; and
(4) ultraviolet (UV) crosslinking: irradiating the coated membrane under UV light to initiate a crosslinking reaction to obtain the coated separator.

11. The preparation method of the coated separator according to claim 10, wherein in the step (3), the operation of coating refers to continuous full coating, wherein the coating liquid is continuously coated on an entire surface of the ceramic layer (20) to form the adhesive coating layer (30) on the entire surface of the ceramic layer (20).

12. The preparation method of the coated separator according to claim 10, wherein in the step (3), the operation of coating refers to discontinuous coating, wherein the coating liquid is discontinuously coated on the ceramic layer (20) at intervals to form the adhesive coating layer (30) discontinuously distributed on the ceramic layer (20).

13. The preparation method of the coated separator according to claim 10, wherein the UV light has a wavelength of 210 nm to 420 nm and an intensity of 50 mj/cm² or more, and the UV crosslinking is conducted for 0.001 s to 10 s.

14. A battery, comprising a coated separator, a positive electrode, a negative electrode, and an electrolyte, wherein the coated separator is the coated separator according to any one of claims 4 to 8 or claim 9.

## Patentansprüche

1. Beschichtungsflüssigkeit, umfassend: ein Lösungsmittel, einen Polymerklebstoff und einen Photoinitiator, wobei der Polymerklebstoff eines oder eine Kombination aus mindestens zwei aus Polymerklebstoff auf Polyvinylidenfluoridbasis (PVDF), ein Polyimid (PI), ein Polyetherimid (PEI) und Polymethylmethacrylat (PMMA) umfasst; **dadurch gekennzeichnet, dass** der Gewichtsanteil des Photoinitiators in der Beschichtungsflüssigkeit 0,08 Gew.-% bis 1,0 Gew.-% beträgt und das Lösungsmittel N-Methylpyrrolidon (NMP) ist.

2. Beschichtungsflüssigkeit nach Anspruch 1, wobei der PVDF-basierte Polymerklebstoff ein oder eine Kombination aus mindestens zwei eines PVDF-Homopolymers, Poly(vinylidenfluorid-co-hexafluorpropylen) (PVDF-HFP), Poly(vinylidenfluorid-tetrafluorethylen-propylen) (PVDF-TFE-P) und Poly(vinylidenfluorid-trifluorethylen-chlortrifluorethylen) (PVDF-TFE-CTFE) umfasst.

3. Beschichtungsflüssigkeit nach Anspruch 1, wobei der Photoinitiator eines oder eine Kombination aus zwei aus Isopropylthioxanthon (ITX) und Benzophenon umfasst.

4. Beschichteter Separator, umfassend eine Membran (10), eine Keramikschicht (20) und eine Klebstoffbeschichtung (30), wobei die Keramikschicht (20) auf einer oder zwei Seiten der Membran (10) aufgebracht ist; und die Klebstoffbeschichtung (30) auf die Keramikschicht (20) aufgebracht ist, und die Klebstoffbeschichtung (30) durch Aufbringen der Beschichtungsflüssigkeit nach einem der Ansprüche 1 bis 3 gebildet ist.

5. Beschichteter Separator nach Anspruch 4, wobei ein Gewichtsverhältnis des Photoinitiators in der Klebstoffbeschichtung (30) 0,05 Gew.-% bis 0,3 Gew.-% beträgt.

6. Beschichteter Separator nach Anspruch 5, wobei die Klebstoffbeschichtung (30) in Zwischenräumen auf der Keramikschicht (20) verteilt ist.

7. Beschichteter Separator nach Anspruch 6, wobei ein Verhältnis einer Fläche der Klebstoffbeschichtung (30) zu der Fläche der Zwischenräume 1:1 bis 5:1 beträgt und die Zwischenräume jeweils einen Spalt zwischen zwei benachbarten Klebstoffbeschichtungen (30) betreffen.

8. Beschichteter Separator nach Anspruch 4, wobei die Keramikschicht (20) ein anorganisches Material umfasst und das anorganische Material eines oder eine Kombination aus mindestens zwei aus Siliciumdioxid, Aluminiumoxid, Böhmit, Titanoxid, Magnesiumoxid oder eine Nanofaser umfasst.

9. Beschichteter Separator nach Anspruch 4, wobei der beschichtete Separator eine Haftfestigkeit von über oder gleich 15 gf/25 mm, eine Bruchtemperatur über 180 °C und einen Oberflächenwiderstand von 1,4 Ω.cm² oder weniger aufweist;
die Haftfestigkeit wird mit einer Zugprüfmaschine gemessen, die Bruchtemperatur wird durch eine thermomechanische Analyse (TMA) bestimmt und der Oberflächenwiderstand wird in einer elektrochemischen Arbeitsstation getestet.

10. Vorbereitungsverfahren für den beschichteten Separator nach einem der Ansprüche 4 bis 8 oder Anspruch 9, die folgenden Schritte umfassend:
(1) Bereitstellen der Membran (10) und Aufbringen der Keramikschicht (20) auf eine oder zwei Seiten der Membran (10);
(2) Vorbereitung der Beschichtungsflüssigkeit: Hinzugeben von 5 Gew.-% bis 30 Gew.-% des Polymerklebstoff und 0,08 Gew.-% bis 1,0 Gew.-% des Photoinitiators zu dem Lösungsmittel und vollständiges Auflösen, um die Beschichtungsflüssigkeit zu erhalten, wobei das Lösungsmittel N-Methylpyrrolidon (NMP) ist;
(3) Beschichtung: Aufbringen der Beschichtungsflüssigkeit auf die Keramikschicht (20), um die Klebstoffbeschichtung (30) auf der Keramikschicht (20) zu bilden und eine beschichtete Membran zu erhalten; und
(4) Ultraviolette Vernetzung (UV-Vernetzung): Bestrahlen der beschichteten Membran unter UV-Licht, um eine Vernetzungsreaktion einzuleiten und den beschichteten Separator zu erhalten.

11. Vorbereitungsverfahren des beschichteten Separators nach Anspruch 10, wobei in Schritt (3) der Beschichtungsvorgang eine vollständige Beschichtung betrifft, wobei die Beschichtungsflüssigkeit kontinuierlich auf eine gesamte Oberfläche der Keramikschicht (20) aufgebracht wird, um die Klebstoffbeschichtung (30) auf der gesamten Oberfläche der Keramikschicht (20) zu bilden.

12. Vorbereitungsverfahren des beschichteten Separators nach Anspruch 10, wobei in Schritt (3) der Beschichtungsvorgang eine diskontinuierliche Beschichtung betrifft, wobei die Beschichtungsflüssigkeit diskontinuierlich an Zwischenräumen auf die Keramikschicht (20) aufgebracht wird, um die Klebstoffbeschichtung (30), die diskontinuierlich auf der Keramikschicht (20) verteilt ist, zu bilden.

13. Vorbereitungsverfahren des beschichteten Separators nach Anspruch 10, wobei das UV-Licht eine Wellenlänge von 210 nm bis 420 nm und eine Intensität von 50 mj/cm² oder mehr aufweist, und die UV-Vernetzung für 0,001s bis 10s ausgeführt wird.

14. Batterie, umfassend einen beschichteten Separator, eine positive Elektrode, eine negative Elektrode und einen Elektrolyten, wobei der beschichtete Separator der beschichtete Separator nach einem der Ansprüche 4 bis 8 oder Anspruch 9 ist.

## Revendications

1. Liquide de revêtement, comprenant : un solvant, une résine de polymère adhésive, et un photo-initiateur, dans lequel la résine de polymère adhésive comprend l'un ou une combinaison d'au moins deux parmi une résine de polymère adhésive à base de polyfluorure de vinylidène (PVDF), un polyimide (PI), un polyétherimide (PEI), le polyméthacrylate de méthyle (PMMA) ; **caractérisé en ce qu'**une proportion en poids du photo-initiateur dans le liquide de revêtement est de 0,08 % en poids à 1,0 % en poids ; et le solvant est la N-méthylpyrrolidone (NMP).

2. Liquide de revêtement selon la revendication 1, dans lequel la résine de polymère adhésive à base de PVDF comprend l'un ou une combinaison d'au moins deux parmi un homopolymère de PVDF, le poly(fluorure de vinylidène-co-hexafluoropropylène) (PVDF-HFP), le poly(fluorure de vinylidène-tétrafluoroéthylène-propylène) (PVDF-TFE-P), et le poly(fluorure de vinylidène-trifluoroéthylène-chlorotrifluoroéthylène) (PVDF-TFE-CTFE).

3. Liquide de revêtement selon la revendication 1, dans lequel photo-initiateur comprend l'une ou une combinaison de deux parmi l'isopropylthioxanthone (ITX) et la benzophénone.

4. Séparateur revêtu, comprenant une membrane (10), une couche céramique (20), et une couche de revêtement adhésive (30), dans lequel la couche céramique (20) est déposée sur un ou deux côtés de la membrane (10) ; et la couche de revêtement adhésive (30) est déposée sur la couche céramique (20), et la couche de revêtement adhésive (30) est formée par dépôt du liquide de revêtement selon l'une quelconque des revendications 1 à 3.

5. Séparateur revêtu selon la revendication 4, dans lequel une proportion en poids du photo-initiateur dans la couche de revêtement adhésive (30) est de 0,05 % en poids à 0,3 % en poids.

6. Séparateur revêtu selon la revendication 5, dans lequel la couche de revêtement adhésive (30) est répartie sur la couche céramique (20) à des intervalles.

7. Séparateur revêtu selon la revendication 6, dans lequel un rapport entre une aire de la couche de revêtement adhésive (30) et une aire des intervalles est de 1:1 à 5:1, et les intervalles font chacun référence à un écartement entre deux couches de revêtement adhésives (30) adjacentes.

8. Séparateur revêtu selon la revendication 4, dans lequel la couche céramique (20) comprend un matériau inorganique, et le matériau inorganique est l'un ou une combinaison d'au moins deux parmi la silice, l'alumine, la boehmite, l'oxyde de titane, l'oxyde de magnésium, ou une nanofibre.

9. Séparateur revêtu selon la revendication 4, dans lequel le séparateur revêtu a une force de liaison supérieure ou égale à 15 gf/25 mm, une température de fracture supérieure à 180 °C, et une résistance superficielle de 1,4 Ω.cm² ou moins ;
la force de liaison est mesurée par une machine de traction, la température de fracture est déterminée par un essai d'analyse thermomécanique (TMA), et la résistance superficielle est mise à l'essai par un poste de travail électrochimique.

10. Procédé de préparation du séparateur revêtu selon l'une quelconque des revendications 4 à 8 ou la revendication 9, comprenant les étapes suivantes :
(1) la fourniture de la membrane (10), et le dépôt de la couche céramique (20) sur un ou deux côtés de la membrane (10) ;
(2) préparation du liquide de revêtement : l'ajout de 5 % en poids à 30 % en poids de la résine de polymère adhésive et de 0,08 % en poids à 1,0 % en poids du photo-initiateur au solvant, et l'attente de la dissolution complète pour obtenir le liquide de revêtement, dans lequel le solvant est la N-méthylpyrrolidone (NMP) ;
(3) dépôt : le dépôt du liquide de revêtement sur la couche céramique (20) pour former la couche de revêtement adhésive (30) sur la couche céramique (20) pour obtenir une membrane revêtue ; et
(4) réticulation par ultraviolets (UV) : l'irradiation de la membrane revêtue à de la lumière UV pour initier une réaction de réticulation pour obtenir le séparateur revêtu.

11. Procédé de préparation du séparateur revêtu selon la revendication 10, dans lequel à l'étape (3), l'opération de dépôt fait référence à un dépôt complet en continu, dans lequel le liquide de revêtement est déposé en continu sur une surface entière de la couche céramique (20) pour former la couche de revêtement adhésive (30) sur la surface entière de la couche céramique (20).

12. Procédé de préparation du séparateur revêtu selon la revendication 10, dans lequel à l'étape (3), l'opération de dépôt fait référence à un dépôt discontinu, dans lequel le liquide de revêtement est déposé de manière discontinue sur la couche céramique (20) à des intervalles pour former la couche de revêtement adhésive (30) répartie de manière discontinue sur la couche céramique (20).

13. Procédé de préparation du séparateur revêtu selon la revendication 10, dans lequel la lumière UV a une longueur d'onde de 210 nm à 420 nm et une intensité de 50 mj/cm² ou plus, et la réticulation par UV est effectuée pendant 0,001 s à 10 s.

14. Batterie, comprenant un séparateur revêtu, une électrode positive, une électrode négative, et un électrolyte, dans laquelle le séparateur revêtu est le séparateur revêtu selon l'une quelconque des revendications 4 à 8 ou la revendication 9.
